(19) Europäisches Patentamt / European Patent Office / Office européen des brevets

(11) **EP 3 396 818 A1**

(12) **EUROPEAN PATENT APPLICATION**

(43) Date of publication:
**31.10.2018 Bulletin 2018/44**

(51) Int Cl.:
**H02K 7/18** *(2006.01)* **H02K 7/06** *(2006.01)*
**H02K 7/116** *(2006.01)*

(21) Application number: **18159581.0**

(22) Date of filing: **01.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2017 JP 2017090599**

(71) Applicant: **Mitsumi Electric Co., Ltd.**
**Tama-shi,**
**Tokyo 206-8567 (JP)**

(72) Inventor: **FUKUMOTO, Hiroyuki**
**Tokyo, Tokyo 206-8567 (JP)**

(74) Representative: **Patent- und Rechtsanwälte**
**Dr. Solf & Zapf**
**Candidplatz 15**
**81543 München (DE)**

(54) **SMALL GENERATOR AND ELECTRONIC DEVICE USING THE SAME**

(57)     A power generator includes an operating portion (51); a first rotating member (62) rotated by external force applied to the operating portion (51), a second rotating member (63) which is able to rotate in the same direction as the first rotating member (62). An elastic member (65) is coupled to both the first rotating member (62) and the second rotating member (63) able to store energy when the first rotating member (62) is rotated and to release the stored energy to rotate the second rotating member (63). A magnet assembly on a toothed wheel is engaged with the second rotating member (63) and rotates together with it. A coil assembly (67) including a coil and a coil core inserted into the coil with two end portions. A magnetic torque is generated between the rotating magnet assembly (66) and the coil core.

FIG. 3

EP 3 396 818 A1

## Description

## FIELD OF THE INVENTION

The present invention generally relates to power generators and electronic devices, in particular to a power generator which can generate electric power by utilizing external force applied through an operating portion and an electronic device including the power generator.

## BACKGROUND ART

Due to the current advance in science and technology, power saving of an electronic circuit has been progressed. Thus, it becomes possible to drive an electronic circuit with electric power generated by utilizing small external force applied from an outside such as external force applied through a switching operation by an operator and external force applied from a vibrating body such as a duct.

Thus, a power generator which can generate electric power by utilizing small external force has been developed. For example, patent document 1 discloses a power generator which can generate electric power when external force is applied for moving a magnet with respect to a coil. Generally, in the power generator which can generate the electric power when the magnet is moved with respect to the coil as disclosed in the patent document 1, the magnet collides against a case of the power generator or other components provided in the case of the power generator after power generation has been performed in order to stop movement of the magnet.

However, such a collision of the magnet results in large loss of kinetic energy of the magnet. Thus, in the conventional power generator, the loss of the kinetic energy of the magnet is large and the external force applied from the outside cannot be efficiently used for the power generation. Further, there is a problem that undesired colliding noise is caused by the collision of the magnet. Further, there is also a problem that demagnetization of the magnet is caused by impact occurring at the time of the collision of the magnet and thus the power generator is broken.

On the other hand, patent document 2 discloses a power generator including a mechanism for stopping movement of a magnet without allowing the magnet to collide against other components of the power generator. The power generator of the patent document 2 utilizes magnetic force generated between the magnet and a core of a coil formed with a magnetic material to reciprocate (vibrate) the magnet with respect to the coil, thereby generating electric power. The power generator of the patent document 2 is configured so that the magnetic force generated between the magnet and the core of the coil acts as force (spring force) for returning the magnet to a predetermined position when the magnet is moved. Thus, reciprocating movement (vibration) of the magnet caused by applying the external force is stopped by the magnetic force generated between the magnet and the core of the coil. Since collision of the magnet against the other components is not caused in the power generator of the patent document 2 having such a mechanism, loss of kinetic energy of the magnet caused by the collision of the magnet does not occur and thus it is possible to efficiently utilize the kinetic energy of the magnet for power generation. Further, the above-described problem that the collision noise is caused by the collision of the magnet and the above-described problem that the demagnetization of the magnet is caused by the impact occurring at the time of the collision of the magnet and thus the power generator is broken do not occur.

However, since a size of the power generator of the patent document 2 is small, it is necessary to increase a speed of the movement of the magnet with respect to the coil for generating the electric power with a sufficient amount. Thus, in the case where the size of the power generator is small, it is required to use an elastic member such as a spring and a flicking mechanism in the power generator. The elastic member serves to store the external force applied from the outside as elastic energy. The flicking mechanism severs to allow the elastic member to store large elastic energy and release the elastic energy under a predetermined condition (for example, a condition that the elastic energy of a predetermined amount is stored in the elastic member) to rapidly move the magnet with respect to the coil.

In such a flicking mechanism, members of the flicking mechanism are engaged with each other to prevent the elastic member from being elastically restored while the elastic member is elastically deformed and the elastic energy is stored in the elastic member. On the other hand, when the elastic member is elastically restored to release the elastic energy from the elastic member, the engagement between the members is released and flicking between the members is performed. By using such a flicking mechanism, it is possible to rapidly move the magnet with respect to the coil.

However, such a flicking mechanism needs a number of assemblies and a configuration of the flicking mechanism is complicated. Thus, in a case of providing such a flicking mechanism in a small-size power generator, there is a problem that a configuration of the power generator becomes complicated. Further, it is difficult to provide such a complicated flicking mechanism in the small power generator, and if the flicking mechanism is provided in the small power generator, a faulty product rate of the power generator at the time of producing the power generator increases. Furthermore, the elastic energy stored in the elastic member is lost by the flicking mechanism. Thus, even if the elastic member and the flicking mechanism are used in the power generator, there is a problem that the external force applied from the outside cannot be efficiently utilized for the power generation. Further, there is a problem that undesired flicking noise is caused by the flicking between the members of the flicking mechanism.

## RELATED ART

## PATENT DOCUMENTS

    Patent document 1: JP 2001-507557A
    Patent document 2: JP H02-262866A

## SUMMARY OF THE INVENTION

## PROBLEMS TO BE SOLVED BY THE INVENTION

The present invention has been made in view of the conventional problems mentioned above. Accordingly, it is an object of the present invention to provide a power generator which can rapidly rotate a magnet without using a flicking mechanism and thus efficiently utilize external force applied from an outside for generating electric power and an electronic device including the power generator.

## MEANS FOR SOLVING THE PROBLEMS

The above object is achieved by the present inventions defined in the following (1) to (10).

(1) A power generator for generating electric power by utilizing external force, comprising:

an operating portion operated for applying the external force;
a first rotating member rotated by the external force applied through the operating portion;
a second rotating member which can be rotated in the same direction as the first rotating member;
an elastic member coupled with the first rotating member and the second rotating member so as to store elastic energy when the first rotating member is rotated and release the stored elastic energy to rotate the second rotating member;
a magnet assembly engaged with the second rotating member and rotated together with the second rotating member; and
a coil assembly including a coil arranged so that lines of magnetic force generated from the magnet assembly pass through a central hollow portion of the coil in an axial direction of the coil whereby a voltage is generated in the coil due to variation of density of the lines of magnetic force passing through the central hollow portion of the coil and a coil core inserted into the coil and arranged so that magnetic torque is generated between the magnet assembly and the coil core,

wherein the elastic member releases the stored elastic energy when rotary torque applied from the elastic member to the second rotating member becomes larger than the magnetic torque applied from the magnet assembly to the second rotating member to rotate the second rotating member and the magnet assembly.

(2) The power generator according to the above (1), wherein each of the first rotating member and the second rotating member has a gear portion.

(3) The power generator according to the above (1) or (2), wherein the operating portion has a rack portion engaged with the gear portion of the first rotating member, and
wherein the first rotating member is rotated due to a vertical movement of the rack portion of the operating portion.

(4) The power generator according to any one of the above (1) to (3), wherein the magnet assembly includes a magnet gear engaged with the gear portion of the second rotating member and a cylindrical magnet attached to the magnet gear, and
wherein the cylindrical magnet is rotated coaxially with the magnet gear portion.

(5) The power generator according to the above (4), wherein when a teeth number of the magnet gear is defined as $N_1$ and a teeth number of the gear portion of the second rotating member is defined as $N_2$, a relationship of "$N_2 > N_1$" is satisfied.

(6) The power generator according to the above (4) or (5), wherein the coil core of the coil assembly has a pair of extending portions facing each other with being apart from each other, and
wherein the cylindrical magnet is located in a space defined by the pair of extending portions of the coil core.

(7) The power generator according to any one of the above (1) to (6), wherein the elastic member is a torsion spring, and
wherein one end of the torsion spring is coupled with the first rotating member and the other end of the torsion spring is coupled with the second rotating member.

(8) The power generator according to any one of the above (1) to (7), further comprising an operating portion elastic member for storing the external force as elastic energy when the operating portion is operated by the external force and releasing the stored elastic energy when applying of the external force with respect to the operating portion is released to return the operating portion to an initial position,

wherein the power generator utilizes the elastic energy released from the operating portion elastic member to perform second power generation.

(9) The power generator according to the above (8), wherein the first rotating member is rotated when the operating portion is returned to the initial position by the operating portion elastic member, and thereby the elastic energy is again stored in the elastic member, and

wherein the elastic member again releases the stored elastic energy when the rotary torque applied from the elastic member to the second rotating member becomes larger than the magnetic torque generated between the magnet assembly and the coil core of the coil assembly to again rotate the second rotating member and the magnet assembly in an opposite direction, thereby performing the second power generation.

(10) An electronic device, comprising:

the power generator defined in any one of the above (1) to (9); and
an electronic circuit driven by the power generator.

## EFFECTS OF THE INVENTION

According to the power generator of the present invention, it is possible to rapidly rotate the magnet without using a flicking mechanism as used in the conventional art. Thus, compared with the conventional power generator using the flicking mechanism, the number of assemblies of the power generator of the present invention is small, the configuration of the power generator of the present invention is simple and the size of the power generator of the present invention is small. Therefore, it is possible to reduce the faulty product rate at the time of producing the power generator of the present invention. Further, in the power generator of the present invention, loss of the external force applied from the outside, which is caused by collision of the magnet and/or a flicking motion of the flicking mechanism, does not occur and thus it is possible to efficiently utilize the external force applied from the outside for generating the electric power. Furthermore, in the power generator of the present invention, noise caused by the collision of the magnet and/or the flicking motion of the flicking mechanism does not occur. Furthermore, in the power generator of the present invention, since the impact caused by the collision of the magnet does not occur, a problem that demagnetization of the magnet is caused by the impact and thus the power generator is broken does not occur.

## BRIEF DESCRITION OF THE DRAWINGS

[Fig. 1] Fig. 1 is a perspective view showing an external view of a power generator (an electronic device) of the present invention.
[Fig. 2] Fig. 2 is an exploded perspective view of the power generator (the electronic device) shown in Fig. 1.
[Fig. 3] Fig. 3 is an exploded perspective view of a power generating mechanism shown in Fig. 2.
[Fig. 4] Fig. 4 is a perspective view of an operating portion and an operating portion elastic member shown in Fig. 3.
[Fig. 5] Fig. 5 is an exploded perspective view of a power generating part of the power generating mechanism shown in Fig. 3.
[Fig. 6] Fig. 6 is a perspective view showing a structure of a frame shown in Fig. 5 on one side.
[Fig. 7] Fig. 7 is a perspective view showing the structure of the frame shown in Fig. 5 on the other side.
[Fig. 8] Fig. 8 is a perspective view showing a first rotating member shown in Fig. 5.
[Fig. 9] Fig. 9 is an exploded perspective view of a magnet assembly shown in Fig. 5.
[Fig. 10] Fig. 10 is a view for explaining coupling relationships among the first rotating member, a second rotating member, an elastic member, a shaft and the magnet assembly shown in Fig. 5.
[Fig. 11] Fig. 11 is an exploded perspective view of a coil assembly shown in Fig. 5.
[Fig. 12] Fig. 12 is a view for explaining a positional relationship between the magnet assembly and the coil assembly shown in Fig. 5.
[Fig. 13] Fig. 13 is a view for explaining magnetic torque generated between the magnet assembly and the coil assembly shown in Fig. 5.
[Fig. 14A] Fig. 14A is a view showing the power generator in a standby state that the operating portion is not depressed by an operator.
[Fig. 14B] Fig. 14B is a view showing a state that depressing of the operating portion is started.
[Fig. 14C] Fig. 14C is a view showing a state that rotations of the second rotating member and the magnet are substantially stopped.
[Fig. 14D] Fig. 14D is a view showing a state that the elastic member stored in the elastic member increases. Fig. 14E is a view showing a state that the rotation of the magnet is started.
[Fig. 14F] Fig. 14F is a view showing a state that first power generation finishes.
[Fig. 15] Fig. 15 is a view showing a rotational angle of the magnet during the motion of the first power generation of the power generator shown in Figs. 14A to 14F.
[Fig. 16A] Fig. 16A is a view showing a state that the operating portion is completely depressed.
[Fig. 16B] Fig. 16B is a view showing a state that applying of the external force to the operating portion is released.
[Fig. 16C] Fig. 16C is a view showing a state that the rotation of the magnet is substantially stopped.

[Fig. 16D] Fig. 16D is a view showing a state that the elastic energy stored in the elastic member increases.

[Fig. 16E] Fig. 16E is a view showing a state that the rotation of the magnet is started.

[Fig. 16F] Fig. 16F is a view showing a state that second power generation finishes.

[Fig. 17A] Fig. 17A is a front view for explaining an internal configuration of the power generator.

[Fig. 17B] Fig. 17B is a rear view for explaining the internal configuration of the power generator.

## DETAILED DESCRIPTION OF THE PREFERRED EMBODIMENTS

Hereinafter, description will be given to a power generator and an electronic device including the power generator of the present invention based on a preferred embodiment shown in the accompanying drawings.

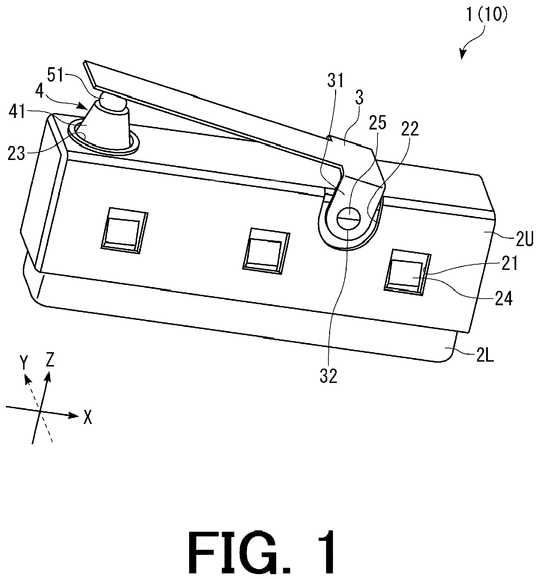

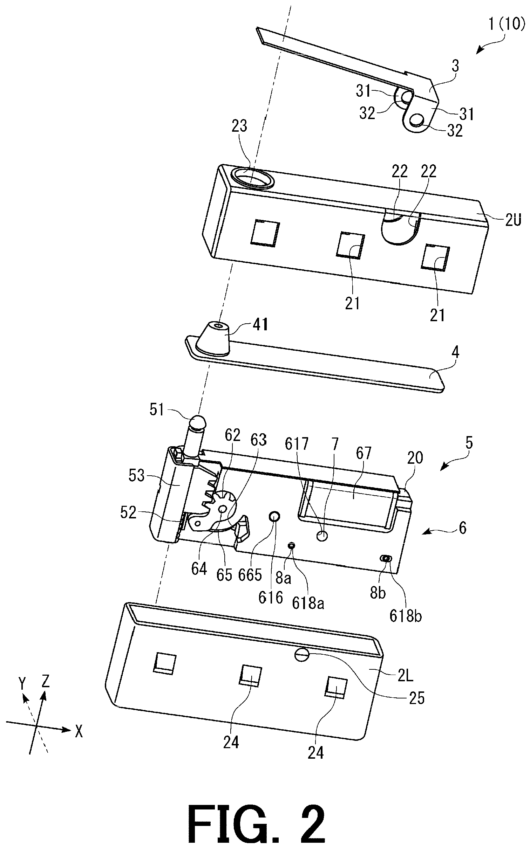

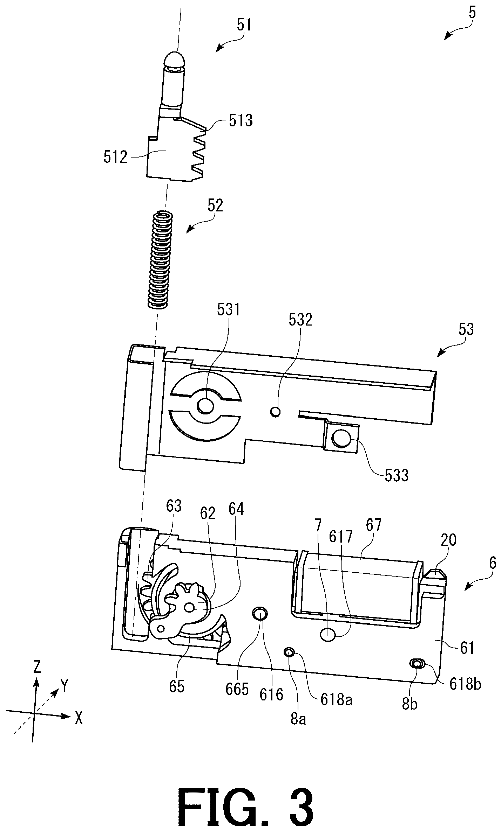

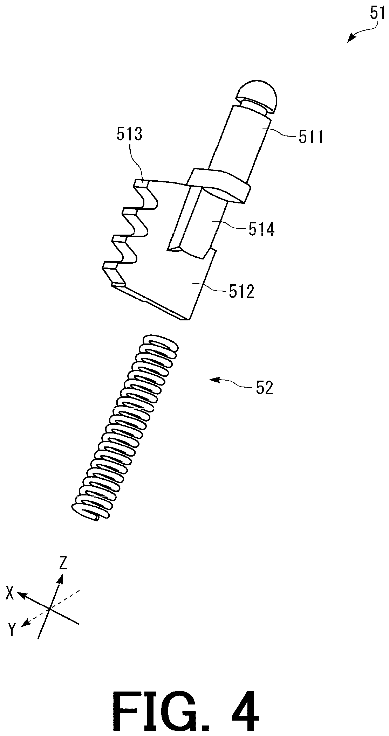

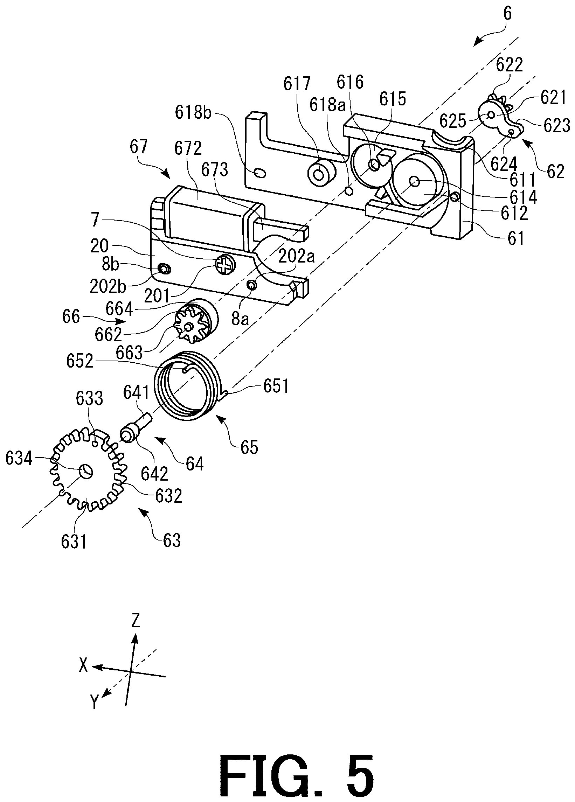

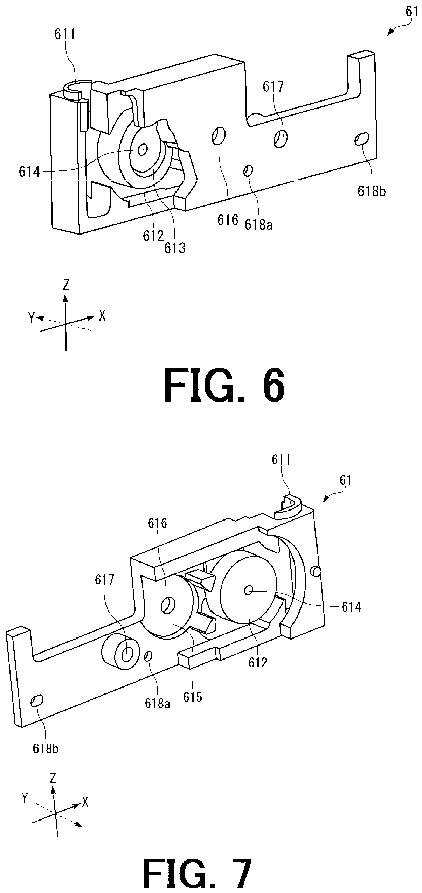

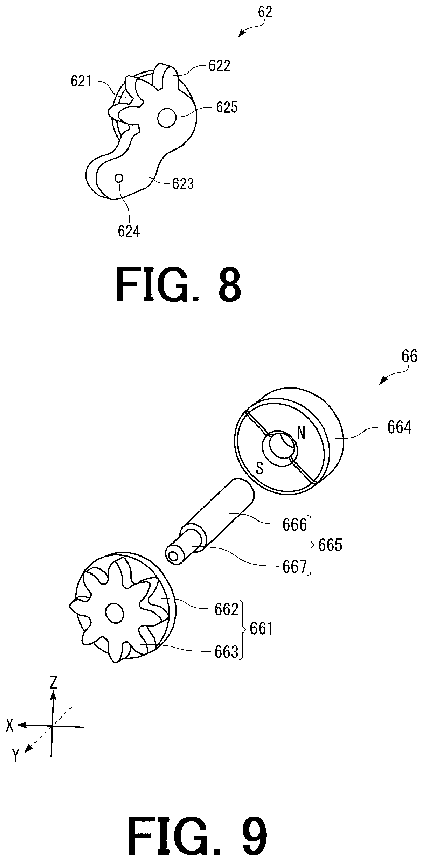

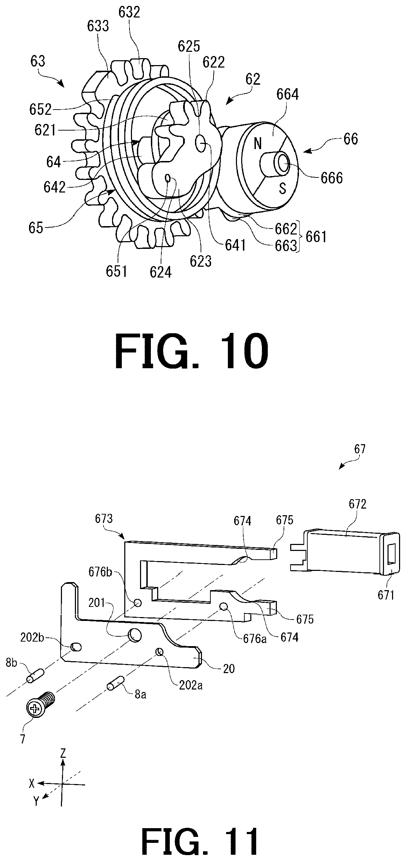

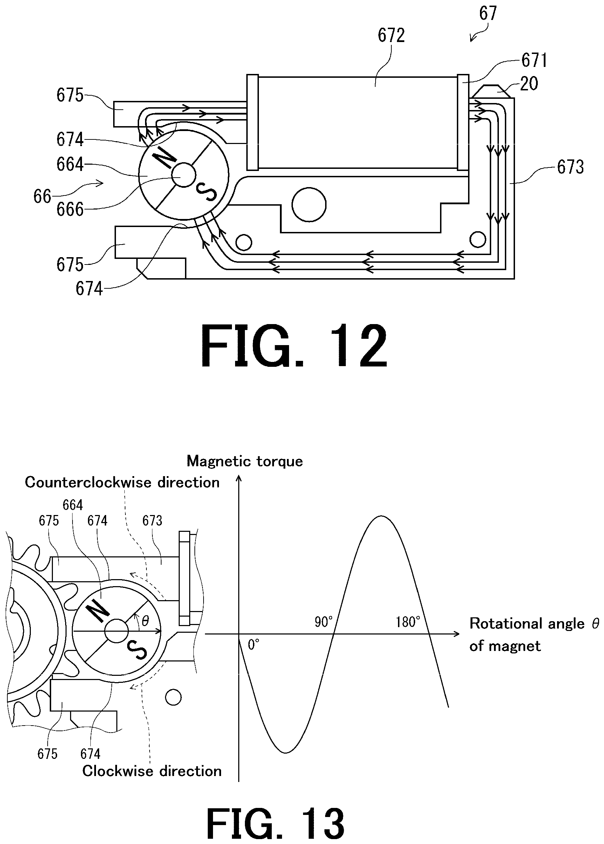

Fig. 1 is a perspective view showing an external view of the power generator (the electronic device) of the present invention. Fig. 2 is an exploded perspective view of the power generator (the electronic device) shown in Fig. 1. Fig. 3 is an exploded perspective view of a power generating mechanism shown in Fig. 2. Fig. 4 is a perspective view of an operating portion and an operating portion elastic member shown in Fig. 3. Fig. 5 is an exploded perspective view of a power generating part of the power generating mechanism shown in Fig. 3. Fig. 6 is a perspective view showing a structure of a frame shown in Fig. 5 on one side. Fig. 7 is a perspective view showing the structure of the frame shown in Fig. 5 on the other side. Fig. 8 is a perspective view showing a first rotating member shown in Fig. 5. Fig. 9 is an exploded perspective view of a magnet assembly shown in Fig. 5. Fig. 10 is a view for explaining coupling relationships among the first rotating member, a second rotating member, an elastic member, a shaft and the magnet assembly shown in Fig. 5. Fig. 11 is an exploded perspective view of a coil assembly shown in Fig. 5. Fig. 12 is a view for explaining a positional relationship between the magnet assembly and the coil assembly shown in Fig. 5. Fig. 13 is a view for explaining magnetic torque generated between the magnet assembly and the coil assembly shown in Fig. 5.

Hereinafter, an upper side in each of Figs. 1 to 4 and 11 to 13 is referred to as "upper" or "upper side", a lower side in each of Figs. 1 to 4 and 11 to 13 is referred to as "lower" or "lower side", a left side in each of Figs. 1 to 4 and 11 to 13 is referred to as "left" or "left side" and a right side in each of Figs. 1 to 4 and 11 to 13 is referred to as "right" or "right side".

An electronic device 10 shown in Figs. 1 and 2 contains a power generator 1 for performing first power generation and second power generation by utilizing external force applied from an outside and an electronic circuit 20 driven by electric power generated by the power generator 1 to provide an arbitrary function.

In this regard, the function provided by the electronic circuit 20 is not particularly limited to a specific kind. For example, the electronic circuit 20 may utilize the electric power supplied from the power generator 1 to provide a wireless transmitting function of wirelessly transmitting a signal to an external device. In this case, the electronic device 10 acts as a battery-less switch which can generate the electric power by utilizing the external force applied from the outside and wirelessly transmit the signal to the external device with the generated electric power.

In substance, the power generator 1 of the present invention includes an upper case 2U and a lower case 2L for containing each component of the power generator 1 and the electronic circuit 20, a lever 3 provided so as to be pivotally moved with respect to the upper case 2U and the lower case 2L, a waterproof packing 4 for preventing water from entering into an internal space defined by the upper case 2U and the lower case 2L, a power generating mechanism 5 for generating the electric power by utilizing external force applied through an operation of an operator with respect to the lever 3 as shown in Fig. 2. In this regard, the electronic circuit 20 is connected to the power generating mechanism 5 and located in the internal space defined by the upper case 2U and the lower case 2L in this embodiment.

The upper case 2U has an elongated box-like shape without having a bottom surface. On the other hand, the lower case 2L has an elongated box-like shape without having an upper surface. The upper case 2U and the lower case 2L are configured so that the lower case 2L can be inserted into the upper case 2U. By inserting the lower case 2L into the upper case 2U, the internal space for containing each component of the power generator 1 and the electronic circuit 20 is defined.

A plurality of rectangular opening portions 21 and a U-shaped opening portion 22 are formed in each of lateral surfaces of the upper case 2U on the rear side and the front side in Fig. 2. On the other hand, a plurality of protruding portions 24 are respectively formed on each lateral surface of the lower case 2L on the rear side and the front side in Fig. 2 at positions respectively corresponding to the plurality of rectangular opening portions 21 of the upper case 2U. Further, cylindrical lever supporting portions 25 are formed on lateral surfaces of the lower case 2L on the rear side and the front side in Fig. 2 at positions respectively corresponding to the U-shaped opening portions 22 of the upper case 2U. When the lower case 2L is inserted into the upper case 2U, the protruding portions 24 of the lower case 2L respectively protrude from the rectangular opening portions 21 of the upper case 2U as shown in Fig. 1, and thereby the upper case 2U and the lower case 2L are assembled. When the upper case 2U and the lower case 2L are assembled, the upper case 2U and the lower case 2L act as a housing of the power generator 1 (the electronic device 10). For example, a size of the housing is about 6.6 mm width x about 12 mm height x about 33 mm length.

As shown in Fig. 1, in a state that the upper case 2U and the lower case 2L are assembled, the lever supporting portions 25 of the lower case 2L protrude toward the outside through the U-shaped opening portions 22 of the upper case 2U.

The lever 3 is formed with a metallic material or a resin material. A pair of engaging portions 31 protruding in a direction (the negative direction of the Z-axis in the drawings) perpendicular to a lengthwise direction of the lever 3 are formed at a right-side end portion of the lever 3. Further, circular openings 32 each having a shape corresponding to a shape of the lever supporting portion 25 of the lower case 2L are respectively formed in the pair of engaging portions 31. When the lever supporting portions 25 of the lower case 2L exposed toward the outside through the U-shaped opening portions 22 of the upper case 2U are respectively inserted into the circular openings 32 of the lever 3, the lever 3 is attached so as to be pivotally moved with respect to the upper case 2U and the lower case 2L. The operator of the power generator 1 can apply the external force to the power generator 1 by pivotally operating the lever 3 so as to approach the lever 3 to the upper case 2U and the lower case 2L to operate (depress) an operating portion 51 of the power generating mechanism 5. As described above, since the operator can pivotally operate the lever 3 to apply the external force in the power generator 1 of the present invention, it is possible to consider the lever 3 as an operating portion of the power generator 1.

Examples of a constituent material for the upper case 2U and the lower case 2L include a weakly magnetic material and a non-magnetic material such as a resin material and a carbon material. From viewpoints of a cost and a weight, it is preferable that the upper case 2U and the lower case 2L are formed with the resin material. The upper case 2U and the lower case 2L may be formed with the same kind of the non-magnetic material or the weakly magnetic material or may be respectively formed with different kinds of the non-magnetic material or the weakly magnetic material.

Further, a circular opening 23 for protruding the operating portion 51 of the power generating mechanism 5 toward the outside is formed in an upper surface of the upper case 2U. As shown in Fig. 2, the waterproof packing 4 is a plate-like member having a planar shape substantially equal to the upper surface of the upper case 2U. An insertion portion 41 into which the operating portion 51 of the power generating mechanism 5 is inserted is formed at a position corresponding to the circular opening 23 of the upper case 2U on an upper surface of the waterproof packing 4. The insertion portion 41 has a hollow conical shape and a through-hole through which the operating portion 51 of the power generating mechanism 5 is passed is formed in a top portion of the insertion portion 41.

As shown in Figs. 1 and 2, in a state that the power generator 1 has been assembled, the waterproof packing 4 is located between the upper case 2U and the power generating mechanism 5. Further, the insertion portion 41 of the waterproof packing 4 protrudes toward the outside through the circular opening 23 of the upper case 2U and the operating portion 51 of the power generating mechanism 5 protrudes toward the outside through the insertion portion 41 of the waterproof packing 4. With this configuration, the waterproof packing 4 can prevent water from entering into the internal space of the power generator 1 and prevent dusts, motes and the like from entering into the internal space of the power generator 1. Examples of a constituent material for the waterproof packing 4 include an elastic material having a waterproof property such as a rubber, an elastomer and other soft resins.

The power generating mechanism 5 has a function of generating the electric power by utilizing the external force applied through the operation of the operator with respect to the lever 3. The power generating mechanism 5 is located between the waterproof packing 4 and the lower case 2L in the internal space of the power generator 1.

As shown in Fig. 3, the power generator 1 includes the operating portion 51 to be operated (depressed) by the operator through the lever 3, an operating portion elastic member 52 for biasing the operating portion 51, a power generating part 6 for generating the electric power and an inner cover 53 for covering the power generating part 6 and the electronic circuit 20. In this regard, the electronic circuit 20 is connected to the power generating part 6 in this embodiment.

Fig. 4 shows the operating portion 51 and the operating portion elastic member 52 viewed from another angle than the angle of Fig. 3. As shown in Fig. 4, the operating portion 51 includes a columnar pressing portion 511 protruding toward the outside through the circular opening 23 of the upper case 2U and the insertion portion 41 of the waterproof packing 4 in the state that the power generator 1 has been assembled, a plate-like portion 512 integrally formed with the pressing portion 511 on the lower side of the pressing portion 511, a rack portion 513 formed on a lateral surface of the plate-like portion 512 and a concave portion 514 formed on the plate-like portion 512 so as to receive the operating portion elastic member 52.

The operating portion elastic member 52 is an elongated coil spring. In the state that the power generator 1 has been assembled, the operating portion elastic member 52 is located in the concave portion 514 of the operating portion 51. In this state, an upper end portion of the operating portion elastic member 52 makes contact with a lower surface of the pressing portion 511 of the operating portion 51 and a lower end portion of the operating portion elastic member 52 makes contact with the power generating part 6. With this arrangement, the operating portion elastic member 52 can store the external force applied by the operator as the elastic energy when the operator depresses the operating portion 51 through the lever 3 and release the stored elastic energy when the depressing of the operating portion 51 through the lever 3 is released by the operator to return the operating portion 51 to a predetermined initial position.

Referring back to Fig. 3, the inner cover 53 is used for covering the power generating part 6 and the electronic circuit 20. The inner cover 53 is formed by subjecting a plate member to a machine process such as a bending process and a punching process. The inner cover 53 has a shape which can cover the power generating part 6 and the electronic circuit 20. The inner cover 53 has through-holes 531, 532, 533 for receiving shafts or a male screw. Each of the inner cover 53 and the operating portion 51 is formed with a weakly magnetic material or a non-magnetic material as is the case for the upper case 2U and the lower case 2L.

Next, the power generating part 6 will be described with reference to Fig. 5. Fig. 5 shows an exploded perspective view of the power generating part 6 and the electronic circuit 20 viewed from another angle than the angle of Fig 3. As shown in Fig. 5, the power generating part 6 includes a frame 61 for holding each component of the power generator 1, a first rotating member 62 which is engaged (meshed) with the rack portion 513 of the operating portion 51 and rotated by the external force applied to the operating portion 51, a second rotating member 63 which can be rotated in the same direction as the first rotating member 62, a shaft 64 for the first rotating member 62 and the second rotating member 63, an elastic member 65 coupled with the first rotating member 62 and the second rotating member 63, a magnet assembly 66 engaged (meshed) with the second rotating member 63 and rotated together with the second rotating member 63 and a coil assembly 67 fixedly attached to the frame 61.

The frame 61 is formed with a weakly magnetic material or a non-magnetic material as is the case for the upper case 2U and the lower case 2L. Fig. 6 shows a structure of the frame 61 on one side (the side of the negative direction of the Y-axis in the drawings). Fig. 7 shows the structure of the frame 61 on the other side (the side of the positive direction of the Y-axis in the drawings).

As shown in Figs. 6 and 7, the frame 61 has a containing portion 611 for containing the operating portion 51 and the operating portion elastic member 52, a columnar portion 612 for supporting the shaft 64, a circular concave portion 613 formed on a surface of the columnar portion 612 on the one side (the side of the negative direction of the Y-axis in the drawings, which is the side shown in Fig. 6), a through-hole 614 formed at a substantially central portion of the columnar portion 612, a circular concave portion 615 formed on a surface of the frame 61 on the other side (the side of the positive direction of the Y-axis in the drawings, which is shown in Fig. 7), a through-hole 616 formed at a substantially central portion of the concave portion 615, a female screw portion 617 and through-holes 618a, 618b.

The containing portion 611 is a cylindrical concave portion formed along the height direction of the frame 61. In the state that the power generator 1 has been assembled, the operating portion 51 and the operating portion elastic member 52 are located in a space defined by the containing portion 611 and an inner surface of the inner cover 53.

In the state that the power generator 1 has been assembled, the first rotating member 62 is located on the columnar portion 612 on the one side (the side of the negative direction of the Y-axis in the drawing, which is shown in Fig. 6) and the second rotating member 63 is located on the columnar portion 612 on the other side (the side of the positive direction of the Y-axis in the drawing, which is shown in Fig. 7). Further, in the state that the power generator 1 has been assembled, the columnar portion 612 is inserted into a central hollow portion of the elastic member 65 and also acts as a fitting axis for the elastic member 65.

The circular concave portion 613 is formed on the columnar portion 612 on the one side (the side of the negative direction of the Y-axis in the drawing, which is shown in Fig. 6) with being concentric with the columnar portion 612. Further, the through-hole 614 is formed in the substantially central portion of the columnar portion 612. In the state that the power generator 1 has been assembled, the first rotating member 62 is supported in the concave portion 613 and the shaft 64 for the first rotating member 62 and the second rotating member 63 is inserted into the through-hole 614.

The concave portion 615 is formed on the frame 61 on the other side (the side of the positive direction of the Y-axis in the drawing, which is shown in Fig. 7). In the state that the power generator 1 has been assembled, the magnet assembly 66 is arranged in the concave portion 615. Further, the through-hole 616 is formed in the substantially central portion of the concave portion 615. In the state that the power generator 1 has been assembled, a shaft 665 of the magnet assembly 66 (see Fig. 9) is inserted into the through-hole 616.

The female screw portion 617 is a cylindrical member having a screwed hole formed at a center of the female screw portion 617 so as to pass through the female screw portion 617. The female screw portion 617 is formed on the frame 61 on the other side (the side of the positive direction of the Y-axis in the drawing, which is shown in Fig. 7). A male screw 7 (see Fig. 11) is screwed into the screwed hole of the female screw portion 617. Further, in the state that the power generator 1 has been assembled, pins 8a, 8b (see Fig. 11) are respectively inserted into the through-holes 618a, 618b. With this configuration, the coil assembly 67 and the electronic circuit 20 are fixedly attached to the frame 61.

The first rotating member 62 is attached to the frame 61 on the one side (the side of the negative direction of the Y-axis in the drawing, which is shown in Fig. 6) and rotated by the external force applied to the operating portion 51. As shown in Fig. 8, the first rotating member 62 has a discoid portion 621, a gear portion 622 formed on the discoid portion 621, an arm portion 623 extending from the gear portion 622, a through-hole 624 formed in the arm portion 623 and a shaft insertion hole 625 formed in substantially central portions of the discoid portion 621 and the gear portion 622 so as to pass through the discoid portion 621 and the gear portion 622.

The discoid portion 621 has a shape corresponding to the concave portion 613 formed on the columnar portion 612 of the frame 61. Further, a thickness of the discoid portion 621 is substantially equal to a depth of the concave portion 613. Thus, in the state that the power generator 1 has been assembled, the discoid portion 621 is contained in the concave portion 613. The gear portion 622 is formed on the discoid portion 621. In the state that the power generator 1 has been assembled, the gear portion 622 is engaged (meshed) with the rack portion 513 of the operating portion 51. Thus, when the operating portion 51 is moved in the vertical direction, the first rotating member 62 is rotated due to the engagement (the meshing) between the rack portion 513 of the operating portion 51 and the gear portion 622 of the first rotating member 62.

The arm portion 623 extends from the gear portion 622 and the through-hole 624 is formed in the arm portion 623 on the tip end side of the arm portion 623. When one end portion 651 of the elastic member 65 (see Figs. 5 and 10) is inserted into the through-hole 624, the first rotating member 62 is coupled with the elastic member 65. In the state that the power generator 1 has been assembled, the shaft 64 is inserted into the shaft insertion hole 625 and thus the shaft 64 acts as a rotational axis for the first rotating member 62.

Referring back to Fig. 5, the second rotating member 63 has a discoid body portion 631, a gear portion 632 formed on a circumference of the body portion 631, a through-hole 633 formed in the vicinity of an outer periphery of the body portion 631 and a shaft insertion hole 634 formed at a substantially central portion of the body portion 631.

Although a diameter of the body portion 631 of the second rotating member 63 is larger than a diameter of the discoid portion 621 of the first rotating member 62 in this embodiment, the present invention is not limited thereto. A ratio between the diameter of the body portion 631 of the second rotating member 63 and the diameter of the discoid portion 621 of the first rotating member 62 may be appropriately set depending on some factors such as a movement distance of the operating portion 51 due to the external force, required rotational angles of the first rotating member 62 and the second rotating member 63 and a spring constant of the elastic member 65.

The gear portion 632 is formed on the circumference of the body portion 631. In the state that the power generator 1 has been assembled, the gear portion 632 is engaged (meshed) with the magnet assembly 66. With this configuration, it becomes possible to transmit the rotation of the second rotating member 63 to the magnet assembly 66 and transmit the rotation of the magnet assembly 66 to the second rotating member 63.

The through-hole 633 is formed in the vicinity of the outer periphery of the body portion 631. When the other end portion 652 of the elastic member 65 (see Figs. 5 and 10) is inserted into the through-hole 633, the second rotating member 63 is coupled with the elastic member 65. As described above, since the one end portion 651 of the elastic member 65 is inserted into the through-hole 624 of the first rotating member 62 and thereby the first rotating member 62 is coupled with the elastic member 65, the first rotating member 62 and the second rotating member 63 are coupled with each other through the elastic member 65.

The shaft insertion hole 634 is formed in the substantially central portion of the body portion 631. In the state that the power generator 1 has been assembled, the shaft 64 is inserted into the shaft insertion hole 634 and thereby the shaft 64 acts as a rotational axis for the second rotating member 63. As described above, since the shaft 64 acts as the rotational axis for the first rotating member 62 in addition to the rotational axis for the second rotating member 63 in the state that the power generator 1 has been assembled, the second rotating member 63 can be rotated coaxially with the first rotating member 62.

The shaft 64 has a columnar body portion 641 and an expanded-diameter portion 642 formed on an end portion of the body portion 641. A diameter of the body portion 641 is larger than a diameter of the through-hole 614 of the frame 61 and thus the body portion 641 is pressed and fitted into the through-hole 614 of the frame 61. Further, the diameter of the body portion 641 is smaller than a diameter of the shaft insertion hole 625 of the first rotating member 62. On the other hand, a diameter of the expanded-diameter portion 642 is smaller than a diameter of the shaft insertion hole 634 of the second rotating member 63 and thus the expanded-diameter portion 642 is inserted into the shaft insertion hole 634 of the second rotating member 63.

The body portion 641 of the shaft 64 is inserted into the through-hole 614 of the frame 61 and the shaft insertion hole 625 of the first rotating member 62 and the expanded-diameter portion 642 of the shaft 64 is inserted into the shaft insertion hole 634 of the second rotating member 63. As a result, the first rotating member 62 and the second rotating member 63 are rotatably supported. Further, in the state that the power generator 1 has been assembled, an end portion of the expanded-diameter portion 642 of the shaft 64 is inserted into the through-hole 531 of the inner cover 53 and supported by the inner cover 53. With this configuration, the first rotating member 62, the shaft 64 and the second rotating member 63 are arranged coaxially with each other and thereby the first rotating member 62 and the second rotating member 63 can be coaxially rotated around the shaft 64.

The elastic member 65 is a cylindrical torsion spring having the central hollow portion. An inner diameter of the elastic member 65 is larger than an outer diameter of the columnar portion 612 of the frame 61. Thus, in the state that the power generator 1 has been assembled, the columnar portion 612 of the frame 61 is located in the central hollow portion of the elastic member 65 and thereby the columnar portion 612 of the frame 61 acts as a fitting axis for the elastic member 65.

As described above, the one end portion 651 of the elastic member 65 is inserted into the through-hole 624 of the first rotating member 62 and thereby the elastic member 65 is coupled with the first rotating member 62. Further, the other end portion 652 of the elastic member 65 is inserted into the through-hole 633 of the second rotating member 63 and thereby the elastic member 65 is coupled with the second rotating member 63. With this configuration, when the first rotating member 62 is rotated by the movement of the operating portion 51, rotary torque is applied to the second rotating member 63 through the elastic member 65 and thereby the second rotating member 63 is rotated in the same direction as the first rotating member 62.

As shown in Figs. 5 and 9, the magnet assembly 66 has a magnet gear 661 having a through-hole formed at a central portion thereof, a cylindrical magnet 664 attached to the magnet gear 661 and a shaft 665 inserted into the through-hole of the magnet gear 661 and a central hollow portion of the cylindrical magnet 664.

As shown in Fig. 9, the magnet gear 661 has a discoid portion 662 having the through-hole formed at a central portion thereof and a gear portion 663 formed on the discoid portion 662 on the other side (the side of the positive direction of the Y-axis in the drawings). The gear portion 663 is configured to be engaged (meshed) with the gear portion 632 of the second rotating member 63 in the state that the power generator 1 has been assembled. With this configuration, it becomes possible to transmit the rotation of the second rotating member 63 to the magnet assembly 66 and transmit the rotation of the magnet assembly 66 to the second rotating member 63. Further, a diameter of the discoid portion 662 of the magnet gear 661 is smaller than a diameter of the second rotating member 63. Thus, a teeth number of the gear portion 663 of the magnet gear 661 is defined as "$N_1$" and a teeth number of the gear portion 632 of the second rotating member 63 is defined as "$N_2$", a relationship of "$N_2 > N_1$" is satisfied. In this regard, as shown in Fig. 5, the gear portion 632 is not formed on a part of a circumference of the body portion 631 of the second rotating member 63 in the vicinity of a portion in which the through-hole 633 is formed. Thus, the teeth number $N_2$ of the second rotating member 63 is a teeth number when it is assumed that the gear portion 632 is formed on the entire of the circumference of the body portion 631.

The magnet 664 is a cylindrical permanent magnet and fixedly attached to the magnet gear 661 on the other side (the side of the negative direction of the Y-axis) with an adhesive agent or the like. As shown in Fig. 9, the magnet 664 is magnetized so that one side of the magnet 664 in a surface direction thereof becomes a north-pole area and the other side of the magnet 664 in the surface direction thereof becomes a south-pole area.

The shaft 665 has an expanded-diameter portion 666 and a reduced-diameter portion 667. The expanded-diameter portion 666 and the reduced-diameter portion 667 are coaxial columnar members and formed integrally with each other. A diameter of the expanded-diameter portion 666 is larger than a diameter of the reduced-diameter portion 667. Further, the diameter of the expanded-diameter portion 666 is smaller than a diameter of the central hollow portion of the magnet 664 and larger than a diameter of the through-hole of the magnet gear 661. The diameter of the reduced-diameter portion 667 is smaller than the diameter of the through-hole of the magnet gear 661. The expanded-diameter portion 666 is inserted into the central hollow portion of the magnet 664 and the reduced-diameter portion 667 is inserted into the through-hole of the magnet gear 661. With this configuration, the magnet 664 can be rotated simultaneously and coaxially with the magnet gear 661 when the magnet gear 661 is rotated. Further, in the state that the power generator 1 has been assembled, an end portion of the reduced-diameter portion 667 of the shaft 665 is inserted into the through-hole 532 of the inner cover 53 and supported by the inner cover 53. Further, an end portion of the expanded-diameter portion 666 of the shaft 665 is inserted into the through-hole 616 of the frame 61 and supported by the frame 61.

The magnet gear 661 is formed with a weakly magnetic material or a non-magnetic material. Although the shaft 665 may be formed with a weakly magnetic material, a non-magnetic material or a magnetic material, it is preferable that the shaft 665 is formed with the magnetic material. BY forming the shaft 665 to be inserted into the central hollow portion of the magnet 664 with the magnetic material, it is possible to increase the number of the lines of magnetic force generated from the magnet 664, thereby increasing a power generation efficiency of the power generator 1.

Fig. 10 shows coupling relationships among the first rotating member 62, the second rotating member 63, the shaft 64, the elastic member 65 and the magnet assembly 66 in the state that the power generator 1 has been assembled. In this regard, for the purpose of illustration, the other components than the first rotating member 62, the second rotating member 63, the shaft 64, the elastic member 65 and the magnet assembly 66 are omitted in Fig. 10.

As shown in Fig. 10, the first rotating member 62, the second rotating member 63 and the elastic member 65 are coaxially arranged around the shaft 64. The elastic member 65 is located between the first rotating member 62 and the second rotating member 63. The one end portion 651 of the elastic member 65 is inserted into the through-hole 624 of the first rotating member 62 and thereby the elastic member 65 is coupled with the first rotating member 62. The other end portion 652 of the elastic member 65 is inserted into the through-hole 633 of the second rotating member 63 and thereby the elastic member 65 is coupled with the second rotating member 63. Further, the gear portion 632 of the second rotating member 63 is engaged (meshed) with the gear portion 663 of the magnet gear 661 of the magnet assembly 66.

With these coupling relationships, it becomes possible to rotate the magnet 664 of the magnet assembly 66 by utilizing the rotation of the first rotating member 62. More specifically, the rotation of the first rotating member 62 is transmitted to the magnet assembly 66 as follows. First, when the operating portion 51 is moved in the vertical direction by the external force applied from the outside, the first rotating member 62 is rotated due to the engagement (the meshing) between the rack portion 513 of the operating portion 51 and the gear portion 622 of the first rotating member 62. When the first rotating member 62 is rotated, the elastic member 65 coupled with the first rotating member 62 is elastically deformed and thereby the rotary torque is applied from the elastic member 65 to the second rotating member 63. When the second rotating member 63 is rotated in the same direction as the rotation of the first rotating member 62 by the applied rotary torque, the magnet gear 661 is rotated due to the engagement (the meshing) between the gear portion 632 of the second rotating member 63 and the gear portion 663 of the magnet gear 661 of the magnet assembly 66. Since the magnet 664 is attached to the magnet gear 661, the magnet 664 is also rotated when the magnet gear 661 is rotated.

Referring back to Fig. 5, the coil assembly 67 is fixedly attached to the frame 61 of the power generating part 6 together with the electronic circuit 20 by the male screw 7 and the pins 8a, 8b. As shown in Fig. 11, the coil assembly 67 includes a bobbin 671, a coil 672 wound around the bobbin 671 and a coil core 673 inserted into the central hollow portion of the coil 672 (a central hollow portion of the bobbin 671).

The coil core 673 is formed by laminating a plurality of plate members formed with a magnetic material. Examples of the magnetic material forming the plate members for the coil core 673 include a ferritic stainless steel (for example, JIS SUS 430), a martensitic stainless steel (for example, JIS SUS 403), a pure iron (for example, JIS SUY), a soft iron, a carbon steel, a magnetic steel (a silicon steel), a high-speed tool steel, a structural steel (for example, JIS SS 400), a permalloy and a combination of two of more of these materials. Among them, it is especially preferable to form the plate members for the coil core 673 with the magnetic steel from viewpoints of an electromagnetic character and a cost.

As shown in Fig. 11, the coil core 673 has a substantially U-like shape opening toward the one side (the side of the negative direction of the X-axis in the drawings). The coil core 673 has a pair of upper and lower extending portions 675 facing each other with being apart from each other and each having an arc portion 674 and through-holes 676a, 676b through which the pins 8a, 8b are respectively inserted.

End portions of the pair of extending portions 675 on the side of the positive direction of the X-axis in the drawings are connected with each other by a connecting portion to form the substantially U-like shape. Each of the arc portions 674 has a shape corresponding to the magnet 664 of the magnet assembly 66. The arc portions 674 are respectively formed at the middles of the pair of the extending portions 675. In the state that the power generator 1 has been assembled, the magnet 664 of the magnet assembly 66 is located in a space defined by the pair of extending portions 675 facing each other with being apart from each other. Further, in the state that the power generator 1 has been assembled, the upper extending portion 675 of the coil core 673 is inserted into the central hollow portion of the coil 672 (the bobbin 671).

The electronic circuit 20 is fixed to the coil core 673 and both end portions (power lead wires) of the coil 672 are connected to the electronic circuit 20. With this configuration, it becomes possible to supply the electric power generated in the coil 672 to the electronic circuit 20 to drive the electronic circuit 20.

The electronic circuit 20 has a through-hole 201 through which the male screw 7 is inserted and through-holes 202a, 202b through which the pins 8a, 8b are respectively inserted. In the state that the power generator 1 has been assembled, the male screw 7 is screwed into the female screw portion 617 of the frame 61 with being inserted into the through-hole 201 of the electronic circuit 20. One end portion of the pin 8a on the one side (the side of the negative direction of the Y-axis in the drawings) is inserted into the through-hole 618a of the frame 61 with being inserted into the through-hole 202a of the electronic circuit 20 and the through-hole 676a of the coil core 673 and thereby the pin 8a is supported by the frame 61. One end portion of the pin 8b the one side (the side of the negative direction of the Y-axis in the drawings) is inserted into the through-hole 618b of the frame 61 with being inserted into the through-hole 202b of the electronic circuit 20 and the through-hole 676b of the coil core 673 and thereby the pin 8b is supported by the frame 61. With this configuration, the coil assembly 67 and the electronic circuit 20 are fixedly attached to the frame 61 of the power generating part 6.

Fig. 12 shows a positional relationship between the magnet assembly 66 and the coil assembly 67 (and the electronic circuit 20) in the state that the power generator 1 has been assembled. In this regard, for the purpose of illustration, the other components other than the magnet assembly 66 and the coil assembly 67 (and the electronic circuit 20) are omitted in Fig. 12.

As shown in Fig. 12, in the state that the power generator 1 has been assembled, the magnet 664 of the magnet assembly 66 is located in the space defined between the pair of extending portions 675 of the coil core 673. Each of the pair of arc portions 674 faces a part of a circumferential portion of the magnet 664 and each of the pair of extending portions 675 linearly extends toward a direction separating from the magnet 664. As described above, the coil core 673 is formed by laminating the plurality of plate members formed with the magnetic material. Thus, the lines of magnetic force generated from the north-pole area of the magnet 664 pass through the coil core 673 and then enter into the south-pole area of the magnet 664. Namely, in the present invention, a magnetic circuit is formed by the coil core 673, the magnet 664 and the coil 672.

Since the coil core 673 has the arc portions 674 respectively facing the parts of the circumferential portion of the magnet 664 and the extending portions 675 linearly extending in the direction separating from the magnet 664, a distance between the coil core 673 and a portion of the north-pole area or the south-pole area of the magnet 664 at which the magnetic force becomes the strongest varies when the magnet 664 is rotated. Thus, when the magnet 664 is rotated, the number of the lines of magnetic force (the magnetic flux density) passing through the coil core 673 varies.

Since the upper extending portion 675 of the coil core 673 is inserted into the central hollow portion of the coil 672 (the central hollow portion of the bobbin 671) as described above, the electric power is generated in the coil 672 due to the dielectric effect when the number of the lines of magnetic force (the magnetic flux density) passing through the coil core 673 varies due to the rotation of the magnet 664.

Further, attracting magnetic force is generated between the magnet 664 and the coil core 673. Since the coil core 673 has the arc portions 674 respectively facing the parts of the circumferential portion of the magnet 664 and the extending portions 675 linearly extending in the direction separating from the magnet 664 as described above, magnetic torque for rotating the magnet 664 to a rotational position at which the magnetic force between the magnet 664 and the coil core 673 becomes the strongest is generated between the magnet 664 and the coil core 673.

Further, since the distance between the coil core 673 and the portion of the north-pole area or the south-pole area of the magnet 664 at which the magnetic force becomes the strongest varies when the magnet 664 is rotated, the magnetic torque generated between the magnet 664 and the coil core 673 varies depending on the rotation of the magnet 664 (the change of the rotational position of the magnet 664).

Since the magnet 664 (the magnet assembly 66) is rotated due to the rotation of the second rotating member 63, the magnetic torque generated between the magnet 664 and the coil core 673 is transmitted from the magnet assembly 66 to the second rotating member 63 and influences the rotation of the second rotating member 63. Thus, hereinafter, description will be given to the magnetic torque generated between the magnet 664 and the coil core 673 with reference to Fig. 13.

The right side of Fig. 13 shows a graph for explaining the variation of the magnetic torque generated between the magnet 664 and the coil core 673. Regarding the Y-axis of the graph in Fig. 13, the magnetic torque on the positive side in the Y-axis means magnetic torque in the counterclockwise direction and the magnetic torque on the negative side in the Y-axis means magnetic torque in the clockwise direction.

Further, an arrowed line in the left side of Fig. 13 is used as a reference for a rotational angle θ. Namely, a state that the portion of the north-pole area of the magnet 664 at which the magnetic force becomes the strongest faces the upper arc portion 674 of the coil core 673 and the portion of the south-pole area of the magnet 664 at which the magnetic force becomes the strongest faces the lower arc portion 674 of the coil core 673 is defined as "0°". In this state, the magnetic torque is 0 [mN].

When the magnet 664 is rotated in the counterclockwise direction (the direction in which the rotational angle θ increases) due to the rotation of the second rotating member 63, the magnetic torque in the clockwise direction for returning the magnet 664 to the state of "θ=0°" is generated between the magnet 664 and the coil core 673. As shown in Fig. 13, the magnetic toque in the clockwise direction generated between the magnet 664 and the coil core 673 increases as the magnet 664 is rotated (the area from θ=0° to about 45° in the graph of Fig. 13).

While the magnetic torque in the clockwise direction generated between the magnet 664 and the coil core 673 increases, the magnetic force between the north-pole area of the magnet 664 and the upper arc portion 674 and the upper extending portion 675 of the coil core 673 is dominant in the magnetic force between the north-pole area of the magnet 664 and the coil core 673. In the same manner, while the magnetic torque in the clockwise direction generated between the magnet 664 and the coil core 673 increases, the magnetic force between the south-pole area of the magnet 664 and the lower arc portion 674 and the lower extending portion 675 of the coil core 673 is dominant in the magnetic force between the south-pole area of the magnet 664 and the coil core 673. Thus, as the distance between the north-pole area of the magnet 664 and the upper arc portion 674 and the upper extending portion 675 of the coil core 673 and the distance between the south-pole area of the magnet 664 and the lower arc portion 674 and the lower extending portion 675 of the coil core 673 increase when the magnet 664 is rotated caused due to the rotation of the second rotating member 63, the magnetic torque in the clockwise direction generated between the magnet 664 and the coil core 673 increases (the area of θ=0° to about 45° in the graph of Fig. 13).

After that, when the magnet 664 is rotated over a certain level (the area of θ= about 45° to 90° in the graph of Fig. 13), the magnetic force between the north-pole area of the magnet 664 and the upper arc portion 674 and the upper extending portion 675 of the coil core 673 decreases. On the other hand, the magnetic force between the north-pole area of the magnet 664 and the lower arc portion 674 and the lower extending portion 675 of the coil core 673 increases. In the same manner, the magnetic force between the south-pole area of the magnet 664 and the lower arc portion 674 and the lower extending portion 675 of the coil core 673 decreases. On the other hand, the magnetic force between the south-pole area of the magnet 664 and the upper arc portion 674 and the upper extending portion 675 of the coil core 673 increases. With this phenomenon, the magnetic torque in the clockwise direction decreases.

As shown in Fig. 13, when the rotational angle $\theta$ of the magnet 664 reaches to 90°, the magnetic torque in the clockwise direction becomes 0 [mN]. When the rotational angle $\theta$ of the magnet 664 exceeds 90° (the area of $\theta$=90° to about 135° in the graph of Fig. 13), the magnetic force between the north-pole area of the magnet 664 and the lower arc portion 674 and the lower extending portion 675 of the coil core 673 and the magnetic force between the south-pole area of the magnet 664 and the upper arc portion 674 and the upper extending portion 675 of the coil core 673 further increase. As a result, the magnetic torque in the counterclockwise direction with respect to the magnet 664 is generated between the magnet 664 and the coil core 673. This magnetic torque in the counterclockwise direction increases and decreases according to the same mechanism as the case where the rotational angle $\theta$ of the magnet 664 is in the range of 0 to 90°.

Heretofore, the magnetic torque generated between the magnet 664 and the coil core 673 in the case where the magnet 664 is rotated in the counterclockwise direction due to the rotation of the second rotating member 63 is described. Even in a case where the magnet 664 is rotated in the clockwise direction due to the rotation of the second rotating member 63, the magnetic torque generated between the magnet 664 and the coil core 673 varies according to the same mechanisms as the case where the magnet 664 is rotated in the counterclockwise direction due to the rotation of the second rotating member 63.

As described above, the magnetic torque generated between the magnet 664 and the coil core 673 varies depending on the rotation of the magnet 664 and provides either one of an action for impeding the rotation of the magnet 664 and an action for accelerating the rotation of the magnet 664 depending on the value of the rotational angle $\theta$ of the magnet 664. Therefore, in the present invention, the magnetic torque generated between the magnet 664 and the coil core 673 acts as a stopper for impeding the rotation of the magnet 664 until the magnet 664 is rotated by a predetermined amount and acts as rotation accelerating means for accelerating the rotation of the magnet 664 after the magnet 664 has been rotated by the predetermined amount.

As shown in Fig. 10, the gear portion 663 of the magnet gear 661 of the magnet assembly 66 is engaged (meshed) with the gear portion 632 of the second rotating member 63. Thus, the magnetic torque generated between the magnet 664 and the coil core 673 is transmitted to the second rotating member 63 through the engagement (the meshing) between the gear portion 663 of the magnet gear 661 of the magnet assembly 66 and the gear portion 632 of the second rotating member 63. Further, since the diameter of the discoid portion 662 of the magnet gear 661 is smaller than the diameter of the second rotating member 63 as described above, the magnetic torque generated between the magnet 664 and the coil core 673 is amplified and transmitted to the second rotating member 63.

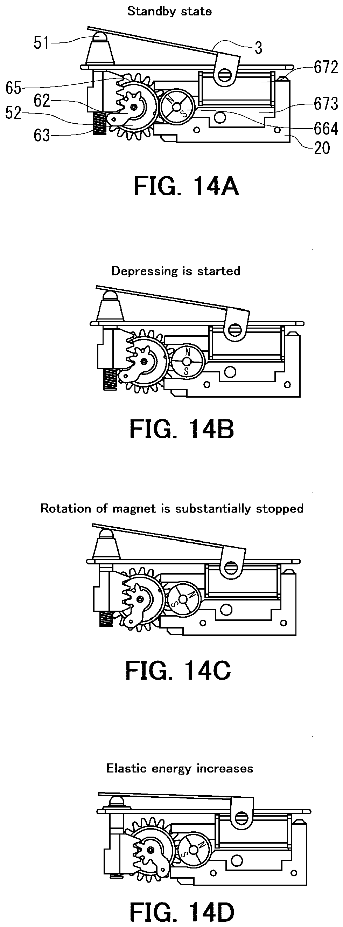

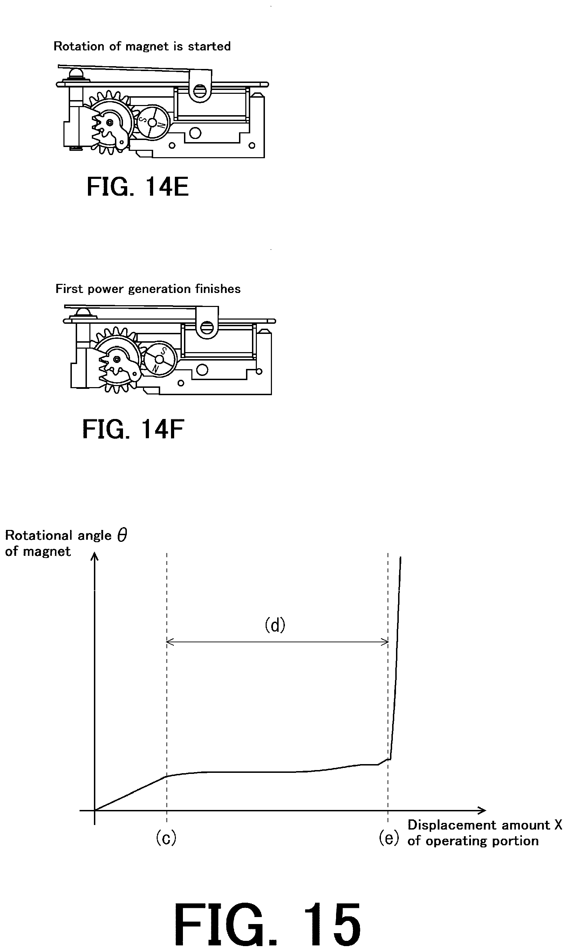

By utilizing the above-described configuration, the power generator 1 of the present invention can utilize the magnetic torque generated between the magnet 664 and the coil core 673 and the elastic member 65 coupled with the first rotating member 62 and the second rotating member 63 to rapidly rotate the magnet 664 without using a flicking mechanism as used in the conventional art, thereby generating the electric power. Hereinafter, a power generating motion of the power generator 1 will be described in detail with reference to Figs. 14 to 16.

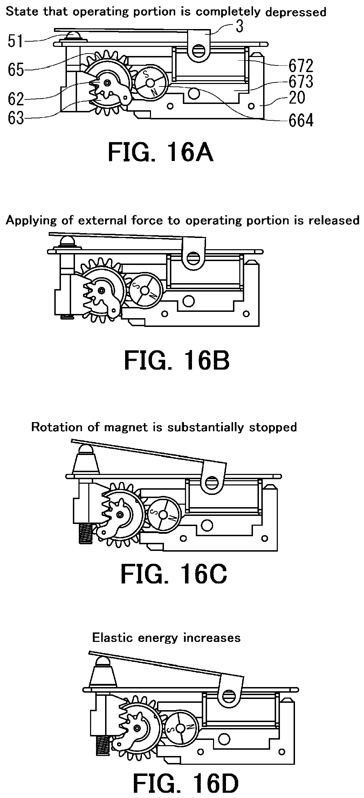

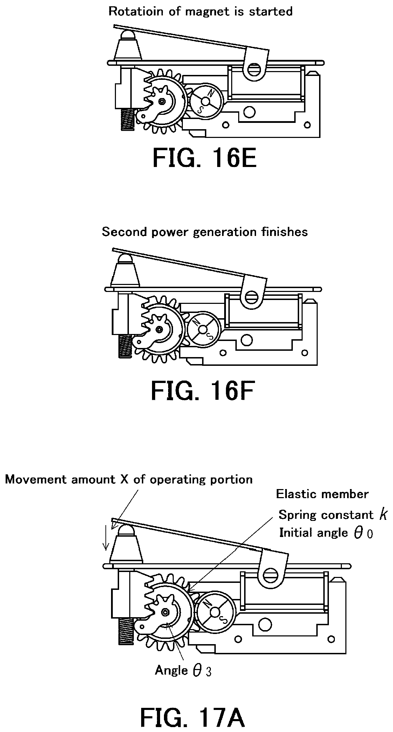

Figs. 14A to 14F are views for explaining a motion of the first power generation of the power generator 1 shown in Fig. 1. Fig. 15 is a view showing the rotational angle of the magnet 664 during the motion of the first power generation of the power generator 1 shown in Figs. 14A to 14F. Figs. 16A to 16F are views for explaining a motion of the second power generation of the power generator shown in Fig. 1. In this regard, the upper case 2U, the lower case 2L, the inner cover 53 and the frame 61 are omitted in Figs. 14 and 16 for explaining an internal configuration of the power generator 1.

First, the first power generation of the power generator 1 is described in detail with reference to Figs. 14A to 14F and 15. Fig. 14A shows the power generator 1 in a standby state that the external force is not applied to the operating portion 51 by the operator. When the lever 3 is operated by the operator to apply the external force to the operating portion 51 of the power generator 1, the power generator 1 shifts to a state shown in Fig. 14B.

In the state shown in Fig. 14B, the operating portion 51 is depressed by the external force applied through the lever 3. When the operating portion 51 is depressed, the operating portion elastic member 52 held between the operating portion 51 and the frame 61 is elastically deformed and thereby the external force applied by the operator is stored in the operating portion elastic member 52 as the elastic energy.

Further, when the operating portion 51 is depressed, the first rotating member 62 is rotated in the counterclockwise direction due to the engagement (the meshing) between the rack portion 513 of the operating portion 51 and the gear portion 622 of the first rotating member 62. When the first rotating member 62 is rotated in the counterclockwise direction, the rotary torque in the counterclockwise direction is applied to the second rotating member 63 through the elastic member 65.

When the rotary torque in the counterclockwise direction is applied from the elastic member 65 to the second rotating member 63, the second rotating member 63 is rotated in the counterclockwise direction in the same manner as the first rotating member 62. When the second rotating member 63 is rotated in the counterclockwise direction, the magnet gear 661 is rotated in the clockwise direction due to the engagement (the meshing) between the gear portion 632 of the second rotating member 63 and the gear portion 663 of the magnet gear 661 of the magnet assembly 66. When the magnet gear 661 is rotated in the clockwise direction, the magnet 664 on the magnet gear 661 is also rotated in the clockwise direction.

When the magnet 664 is rotated in the clockwise direction, the magnetic torque between the magnet 664 and the coil core 673 of the coil assembly 67 increases according to the mechanism described with reference to Fig. 13. The magnetic torque between the magnet 664 and the coil core 673 of the coil assembly 67 at this time is rotary torque in the counterclockwise direction acting so as to impede the rotation of the magnet 664 (the rotation of the magnet assembly 66). This magnetic torque in the counterclockwise direction between the magnet 664 and the coil core 673 of the coil assembly 67 is transmitted from the magnet assembly 66 to the second rotating member 63 through the engagement (the meshing) between the gear portion 632 of the second rotating member 63 and the gear portion 663 of the magnet gear 661 of the magnet assembly 66. While the rotary torque applied from the elastic member 65 to the second rotating member 63 is larger than the magnetic torque (the rotary torque) applied from the magnet assembly 66 to the second rotating member 63, the second rotating member 63 and the magnet assembly 66 are rotated.

When the operating portion 51 is further depressed from the state shown in Fig. 14B, the magnetic torque in the counterclockwise direction between the magnet 664 and the coil core 673 of the coil assembly 67 further increases. As a result, when the magnetic torque (the rotary torque) applied from the magnet assembly 66 to the second rotating member 63 becomes substantially equal to the rotary torque applied from the elastic member 65 to the second rotating member 63, the power generator 1 shifts to a state shown in Fig. 14C.

In the state shown in Fig. 14C, as a result that the magnetic torque in the counterclockwise direction between the magnet 664 and the coil core 673 of the coil assembly 67 increases due to the rotation of the magnet 664 in the clockwise direction, the magnetic torque (the rotary torque) applied from the magnet assembly 66 to the second rotating member 63 becomes substantially equal to the rotary torque applied from the elastic member 65 to the second rotating member 63. Thus, a rotational speed of the second rotating member 63 rapidly decreases and then the rotations of the second rotating member 63 and the magnet 664 are substantially stopped. When the operating portion 51 is further depressed from the state shown in Fig. 14C, the power generator 1 shifts to a state shown in Fig. 14D.

In the state shown in Fig. 14D, the operating portion 51 is further depressed and thus the first rotating member 62 is further rotated in the counterclockwise direction due to the engagement (the meshing) between the rack portion 513 of the operating portion 51 and the gear portion 622 of the first rotating member 62. On the other hand, since the rotating member 63 is not substantially rotated, the elastic member 65 coupled with the first rotating member 62 and the second rotating member 63 is elastically deformed and thereby the elastic energy is stored in the elastic member 65. At this time, the rotation of the second rotating member 63 (the rotation of the magnet 664) is not completely stopped because the second rotating member 63 and the magnet 664 are slightly rotated as the rotary torque applied from the elastic member 65 to the second rotating member 63 increases due to the further depressing of the operating portion 51 so as to make the magnetic torque between the magnet 664 and the coil core 673 of the coil assembly 67 substantially equal to the increased rotary torque applied from the elastic member 65 to the second rotating member 63.

The rotary torque applied from the elastic member 65 to the second rotating member 63 depends on an amount of the elastic deformation of the elastic member 65, that is an amount of the elastic energy stored in the elastic member 65. Thus, as the elastic energy stored in the elastic member 65 increases, the rotary torque applied from the elastic member 65 to the second rotating member 63 also increases. When the operating portion 51 is further depressed from the state shown in Fig. 14D, the elastic energy stored in the elastic member 65 and the rotary torque applied from the elastic member 65 to the second rotating member 63 increase. Then, when the rotary torque applied from the elastic member 65 to the second rotating member 63 becomes larger than the magnetic torque (the rotary torque) applied from the magnet assembly 66 to the second rotating member 63, the power generator 1 shifts to a state shown in Fig. 14E.

In the state shown in Fig. 14E, as a result that the rotary torque applied from the elastic member 65 to the second rotating member 63 becomes larger than the magnetic torque (the rotary torque) applied from the magnet assembly 66 to the second rotating member 63, the elastic energy stored in the elastic member 65 is released and thereby the second rotating member 63 and the magnet 664 are rapidly rotated. Since the magnetic torque in the counterclockwise direction between the magnet 664 and the coil core 673 of the coil assembly 67 decreases when the rotational angle θ of the magnet 664 exceeds the predetermined value as described above, the second rotating member 63 and the magnet 664 are rapidly rotated in the clockwise direction.

When the magnet 664 is rapidly rotated, the density of the lines of magnetic force (the magnetic flux density) passing through the coil core 673 rapidly varies. At this time, since the density of the lines of magnetic force (the magnetic flux density) passing through the central hollow portion of the coil 672 rapidly varies, an electromotive voltage is generated in the coil 672 due to the electromagnetic induction effect. Further, the power generator 1 is configured so that the north-pole and the south-pole of the magnet 664 are inverted in the same plane by the rotation of the magnet 664. Thus, the variation of the density of the lines of magnetic force (the magnetic flux density) passing through the central hollow portion of the coil 672 due to the rotation of the magnet 664 is large. As a result, the power generator 1 can efficiently generate the electric power. According to this motion as described above, the power generator 1 can perform the first power generation. After the first power generation is performed and the rotation of the magnet 664 due to the elastic energy released from the elastic member 65 is stopped, the power generator 1 shifts to a state shown in Fig. 14F and the first power generation finishes.

Fig. 15 shows a relationship between the rotational angle $\theta$ of the magnet 664 and a displacement amount (a depressed amount) of the operating portion 51. When the operating portion 51 is displaced, the first rotating member 62, the second rotating member 63 and the magnet 664 (the magnet assembly 66) are rotated and thus the rotational angle $\theta$ of the magnet 664 increases. After that, when the displacement amount of the operating portion 51 increases and exceeds a dotted line (c) in Fig. 15 corresponding to the state shown in Fig. 14C, the rotation of the magnet 664 is substantially stopped and an increase speed of the rotational angle $\theta$ of the magnet 664 decreases. After that, the magnet 664 is not substantially rotated in an area (d) corresponding to the state shown in Fig. 14D. On the other hand, the elastic energy stored in the elastic member 65 increases in the area (d) corresponding to the state shown in Fig. 14D.

After that, when the displacement amount of the operating portion 51 further increases and exceeds a dotted line (e) in Fig. 15 corresponding to the state shown in Fig. 14E, the elastic energy stored in the elastic member 65 is released. At this time, the magnet 664 is rapidly rotated and the rotational angle $\theta$ of the magnet 664 rapidly increases. As described above, in the power generator 1 of the present invention, the elastic member 65 is coupled with the first rotating member 62 and the second rotating member 63 so as to store the elastic energy when the first rotating member 62 is rotated and release the stored elastic energy to rapidly rotate the second rotating member 63 and the magnet 664. Thus, the power generator 1 can utilize the magnetic torque generated between the magnet 664 and the coil core 673 and the elastic member 65 coupled with the first rotating member 62 and the second rotating member 63 to rapidly rotate the magnet 664, thereby generating the electric power.

Next, the second power generation of the power generator 1 will be described in detail with reference to Figs. 16A to 16F. Fig. 16A shows a state that the operating portion 51 is completely depressed by the operator after the motion of the first power generation shown in Fig. 14F is performed. When the applying of the external force to the operating portion 51 through the lever 3 is released by the operator, the power generator 1 shifts to a state shown in Fig. 16B.

In the state shown in Fig. 16B, the applying of the external force to the operating portion 51 through the lever 3 is released by the operator and the operating portion elastic member 52 is elastically restored. As a result, the elastic energy stored in the operating portion elastic member 52 is released and thus the operating portion 51 is pushed up. When the operating portion 51 is pushed up, the first rotating member 62 is rotated in the clockwise direction due to the engagement (the meshing) between the rack portion 513 of the operating portion 51 and the gear portion 622 of the first rotating member 62. When the first rotating member is rotated in the clockwise direction, the rotary torque in the clockwise direction is applied to the second rotating member 63 through the elastic member 65.

When the rotary torque in the clockwise direction is applied from the elastic member 65 to the second rotating member 63, the second rotating member 63 is rotated in the clockwise direction in the same manner as the first rotating member 62. When the second rotating member 63 is rotated in the clockwise direction, the magnet gear 661 is rotated in the counterclockwise direction due to the engagement (the meshing) between the gear portion 632 of the second rotating member 63 and the gear portion 663 of the magnet gear 661 of the magnet assembly 66. When the magnet gear 661 is rotated in the counterclockwise direction, the magnet 664 on the magnet gear 661 is also rotated in the counterclockwise direction.

When the magnet 664 is rotated in the counterclockwise direction, the magnetic torque between the magnet 664 and the coil core 673 of the coil assembly 67 increases according to the mechanism described with reference to Fig. 13. The magnetic torque between the magnet 664 and the coil core 673 of the coil assembly 67 at this time is rotary torque in the clockwise direction acting so as to impede the rotation of the magnet 664 (the rotation of the magnet assembly 66). This magnetic torque in the clockwise direction between the magnet 664 and the coil core 673 of the coil assembly 67 is transmitted from the magnet assembly 66 to the second rotating member 63 through the engagement (the meshing) between the gear portion 632 of the second rotating member 63 and the gear portion 663 of the magnet gear 661 of the magnet assembly 66. While the rotary torque applied from the elastic member 65 to the second rotating member 63 is larger than the magnetic torque (the rotary torque) applied from the magnet assembly 66 to the second rotating member 63, the second rotating member 63 and the magnet assembly 66 are rotated.

When the operating portion 51 is further pushed up from the state shown in Fig. 16B, the magnetic torque in the clockwise direction between the magnet 664 and the coil core 673 of the coil assembly 67 further increases.

As a result, when the magnetic torque (the rotary torque) applied from the magnet assembly 66 to the second rotating member 63 becomes substantially equal to the rotary torque applied from the elastic member 65 to the second rotating member 63, the power generator 1 shifts to a state shown in Fig. 16C.

In the state shown in Fig. 16C, as a result that the magnetic torque in the clockwise direction between the magnet 664 and the coil core 673 of the coil assembly 67 increases due to the rotation of the magnet 664 in the counterclockwise direction, the magnetic torque (the rotary torque) applied from the magnet assembly 66 to the second rotating member 63 becomes substantially equal to the rotary torque applied from the elastic member 65 to the second rotating member 63. Thus, the rotational speed of the second rotating member 63 rapidly decreases and then the rotations of the second rotating member 63 and the magnet 664 are substantially stopped. When the operating portion 51 is further pushed up from the state shown in Fig. 16C, the power generator 1 shifts to a state shown in Fig. 16D.

When the operating portion 51 is further pushed up from the state shown in Fig. 16D, the elastic energy stored in the elastic member 65 and the rotary torque applied from the elastic member 65 to the second rotating member 63 increase. Then, when the rotary torque applied from the elastic member 65 to the second rotating member 63 becomes larger than the magnetic torque (the rotary torque) applied from the magnet assembly 66 to the second rotating member 63, the power generator 1 shifts to a state shown in Fig. 16E.

In the state shown in Fig. 16E, as a result that the rotary torque applied from the elastic member 65 to the second rotating member 63 becomes larger than the magnetic torque (the rotary torque) applied from the magnet assembly 66 to the second rotating member 63, the elastic energy stored in the elastic member 65 is released and thereby the second rotating member 63 and the magnet 664 are rapidly rotated. Since the magnetic torque in the clockwise direction between the magnet 664 and the coil core 673 of the coil assembly 67 decreases when the rotational angle θ of the magnet 664 increases and exceeds the predetermined value as described above, the second rotating member 63 and the magnet 664 are rapidly rotated in the counterclockwise direction.

When the magnet 664 is rapidly rotated, the density of the lines of magnetic force (the magnetic flux density) passing through the coil core 673 rapidly varies. At this time, since the density of the lines of magnetic force (the magnetic flux density) passing through the central hollow portion of the coil 672 rapidly varies, the electromotive voltage is generated in the coil 672 due to the electromagnetic induction effect. According to this motion as described above, the power generator 1 can perform the second power generation. After the second power generation is performed and the rotation of the magnet 664 due to the elastic energy released from the elastic member 65 is stopped, the power generator 1 shifts to a state shown in Fig. 16F and the second power generation finishes. As described above, in the power generator 1, the direction of the rotation of the magnet 664 in the motion of the second power generation is opposite to the direction of the rotation of the magnet 664 in the motion of the first power generation.

As described above, in each of the first power generation and the second power generation of the power generator 1, the rotations of the second rotating member 63 and the magnet 664 go through the following three phases. At a first phase, that is a phase in which the rotary torque applied from the elastic member 65 to the second rotating member 63 is larger than the magnetic torque (the rotary torque) applied from the magnet assembly 66 to the second rotating member 63, the second rotating member 63 and the magnet 664 are rotated due to the rotation of the first rotating member 62. At a second phase, that is a phase in which the magnetic torque (the rotary torque) applied from the magnet assembly 66 to the second rotating member 63 is substantially equal to the rotary torque applied from the elastic member 65 to the second rotating member 63, the first rotating member 62 is rotated whereas the second rotating member 63 and the magnet 664 are not substantially rotated. At this time, the elastic member 65 is elastically deformed and thereby the elastic energy is stored in the elastic member 65. Finally, at a third phase, that is a phase in which the rotary torque applied from the elastic member 65 to the second rotating member 63 again becomes larger than the magnetic torque (the rotary torque) applied from the magnet assembly 66 to the second rotating member 63, the elastic energy stored in the elastic member 65 is released and thereby the second rotating member 63 and the magnet 664 are rapidly rotated. At this time, the power generation is performed.

As described above, the power generator 1 does not need to use the flicking mechanism used in the conventional art for rapidly moving (or moving) the magnet 664. Compared with the conventional power generator using the flicking mechanism, the number of the assemblies of the power generator 1 is small, the configuration of the power generator 1 is simple and the size of the power generator 1 is small. Therefore, it is possible to reduce the faulty product rate at the time of producing the power generator 1. Further, in the power generator 1, loss of the external force applied from the outside, which is caused by a collision of a magnet and/or a flicking motion of the flicking mechanism, does not occur and thus it is possible to efficiently utilize the external force applied from the outside for the power generation. Furthermore, in the power generator 1, noise caused by the collision of the magnet and/or the flicking motion of the flicking mechanism does not occur. Furthermore, in the power generator 1, since an impact caused by the collision of the magnet does not occur, the conventional problem that the demagnetization of the magnet is caused by the impact and thus the power generator 1 is broken does not occur.

In the power generator 1, a ratio (a gear ratio) $N_2/N_1$ between the teeth number $N_1$ of the gear portion 663 of the magnet gear 661 of the magnet assembly 66 and the teeth number $N_2$ of the gear portion 632 of the second rotating member 63 is set according to the following idea in order to enable the motions of the first power generation and the second power generation described above.

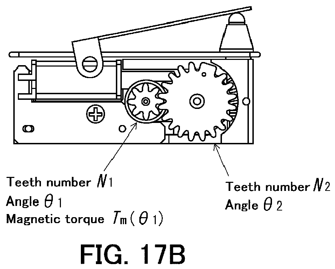

Figs. 17A and 17B are views for explaining a method for deciding the ratio (the gear ratio) $N_2/N_1$ between the teeth number $N_1$ of the gear portion of the magnet gear of the magnet assembly and the teeth number $N_2$ of the gear portion of the second rotating member in the power generator shown in Fig. 1. Fig. 17A is a front view for explaining the internal configuration of the power generator 1. Fig. 17B is a rear view for explaining the internal configuration of the power generator 1. In this regard, for the purpose of illustrating the internal configuration of the power generator 1, the upper case 2U, the lower case 2L, the inner cover 53 and the frame 61 are omitted in Figs. 17A and 17B.

As shown in Figs. 17A and 17B, the movement amount (the depressing amount or the pushing-up amount) of the operating portion 51 is defined as "x", the spring constant of the elastic member 65 is defined as "k", an initial angle of the elastic member 65 is defined as "$\theta°$", an angle of the gear portion 663 of the magnet gear 661 of the magnet assembly 66 is defined as "$\theta_1$", an angle of the second rotating member 63 is defined as "$\theta_2$", an angle of the first rotating member 62 is defined as "$\theta_3$" and the magnetic torque between the magnet 664 and the coil core 673 is defined as "$Tm(\theta_1)$".

When the operating portion 51 is moved by the movement amount x by depressing or pushing up the operating portion 51, the first rotating member 62 is rotated by the angle $\theta_3=\theta_3(x)$. At this time, the rotary torque caused by force of the elastic member 65 can be expressed by $k\Delta\theta$ with a term of "$\Delta\theta=\theta_3(x)-\theta_2-\theta_0$" which is obtained by subtracting the free angle (the initial angle) $\theta_0$ from a difference between the angle $\theta_3(x)$ of the first rotating member 62 and the angle $\theta_2$ of the second rotating member 63.

On the other hand, the magnetic torque (the rotary torque) $Tm(\theta_1)$ applied from the magnet assembly 66 to the second rotating member 63 is amplified by the ratio (the gear ratio) $N_2/N_1$ between the teeth number $N_1$ of the gear portion 663 of the magnet gear 661 of the magnet assembly 66 and the teeth number $N_2$ of the gear portion 632 of the second rotating member 63 and thus can be expressed by "$N_2/N_1 \times Tm(\theta_1)$". Further, when a maximum value of the magnetic torque between the magnet 664 and the coil core 673 is defined as "$T_{max}$", the following inequality (1) is satisfied before the magnet 664 is rotated.

$$k\Delta\theta \le N_2/N_1 \times T_{max} \quad (1)$$

Further, the elastic energy stored in the elastic member 65 can be expressed by "$1/2 \times k\Delta\theta^2$". Next, discussion is given to a condition for the elastic energy stored in the elastic member 65. Since the elastic energy stored in the elastic member 65 is "$1/2 \times k\Delta\theta^2$", energy generated by the power generator 1 can be expressed by "$1/2 \times \alpha k\Delta\theta^2$" when a power generation efficiency of the power generator 1 is defined as "$\alpha$". Here, when a target power generation amount which should be obtained is defined as "W", the following inequality (2) should be satisfied.

$$1/2 \times k\Delta\theta^2 > W \quad (2)$$

Since a maximum value of $\Delta\theta$ (that is a value of $\Delta\theta$ when the equality in the inequality (1) is satisfied) is determined according to the condition of the above inequality (1), it is checked whether or not the above inequality (2) is satisfied when the term of "$\Delta\theta$" takes the maximum value. In a case where the above inequality (2) is not satisfied, the gear ratio $N_2/N_1$ is adjusted so as to satisfy the above inequality (2). According to the method described above, the gear ratio $N_2/N_1$ between the teeth number $N_1$ of the gear portion 663 of the magnet gear 661 of the magnet assembly 66 and the teeth number $N_2$ of the gear portion 632 of the second rotating member 63 is set. By setting the gear ratio $N_2/N_1$ between the teeth number $N_1$ of the gear portion 663 of the magnet gear 661 of the magnet assembly 66 and the teeth number $N_2$ of the gear portion 632 of the second rotating member 63 as described above, it is possible to set the power generation amount W of the power generator 1 to be a desired value.

Although the power generator and the electronic device of the present invention have been described based on the embodiment shown in the accompanying drawings in the above description, the present invention is not limited thereto. The configuration of each component of the present invention may be possibly replaced with other arbitrary configurations having equivalent functions. Further, it may be also possible to add other arbitrary components to the configuration of the present invention.

Further, the number and the kinds of the components of the power generator and the electronic device of the present invention are merely provided for the illustration of the present invention, the present invention is not necessarily limited thereto. The scope of the present invention contains alternations and changes of the described configurations in which arbitrary constitutional components are added or combined or arbitrary constitutional components are omitted without meaningfully departing from the principle and the spirit of the present invention.

For example, although the electronic circuit 20 is provided in the power generator 1 in the above-described embodiment, the present invention is not limited thereto. For example, an aspect in which the electronic circuit 20 is provided outside the power generator 1 and the electronic circuit 20 is connected to the power lead wires extending from the power generator 1 to the outside directly or through other devices is also contained in the scope of the present invention.

Further, although each of the first rotating member 62 and the second rotating member 63 is a gear-like member rotated due to the movement of the operating portion 51 in the above-described embodiment, the present invention is not limited thereto. For example, each of the first rotating member 62 and the second rotating member 63 may be a rotating lever rotated due to the movement of the operating portion 51.

Further, although the second rotating member 63 is configured to be rotated coaxially with the first rotating member 62 in the above-described embodiment, the present invention is not limited thereto. The second rotating member 63 may take any configuration as long as it can be rotated in the same direction as the first rotating member 62. For example, an aspect in which the rotational axis of the second rotating member 63 and the rotational axis of the first rotating member 62 do not coincide with each other is also contained in the scope of the present invention.

Further, although the magnet 664 is the cylindrical magnet in the above-described embodiment, the present invention is not limited thereto. For example, the magnet 664 may be a bar magnet. Further, although the coil spring and the torsion spring are respectively employed as the operating portion elastic member 52 and the elastic member 65 in the above-described embodiment, the present invention is not limited thereto. For example, it is possible to employ an elastic mechanism using springs having other configurations, rubbers, air cylinders or the like as the operating portion elastic member 52 and the elastic member 65.

**Claims**

1. A power generator for generating electric power by utilizing external force, comprising:

   an operating portion operated for applying the external force;
   a first rotating member rotated by the external force applied through the operating portion;
   a second rotating member which can be rotated in the same direction as the first rotating member;
   an elastic member coupled with the first rotating member and the second rotating member so as to store elastic energy when the first rotating member is rotated and release the stored elastic energy to rotate the second rotating member;
   a magnet assembly engaged with the second rotating member and rotated together with the second rotating member; and
   a coil assembly including a coil arranged so that lines of magnetic force generated from the magnet assembly pass through a central hollow portion of the coil in an axial direction of the coil whereby a voltage is generated in the coil due to variation of density of the lines of magnetic force passing through the central hollow portion of the coil and a coil core inserted into the coil and arranged so that magnetic torque is generated between the magnet assembly and the coil core,
   wherein the elastic member releases the stored elastic energy when rotary torque applied from the elastic member to the second rotating member becomes larger than the magnetic torque applied from the magnet assembly to the second rotating member to rotate the second rotating member and the magnet assembly.

2. The power generator as claimed in claim 1, wherein each of the first rotating member and the second rotating member has a gear portion.

3. The power generator as claimed in claim 1 or 2, wherein the operating portion has a rack portion engaged with the gear portion of the first rotating member, and
   wherein the first rotating member is rotated due to a vertical movement of the rack portion of the operating portion.

4. The power generator as claimed in any one of claims 1 to 3, wherein the magnet assembly includes a magnet gear engaged with the gear portion of the second rotating member and a cylindrical magnet attached to the magnet gear, and
   wherein the cylindrical magnet is rotated coaxially with the magnet gear.

5. The power generator as claimed in claim 4, wherein when a teeth number of the magnet gear is defined as $N_1$ and a teeth number of the gear portion of the second rotating member is defined as $N_2$, a relationship of "$N_2>N_1$" is satisfied.

6. The power generator as claimed in claim 4 or 5, wherein the coil core of the coil assembly has a pair of extending portions facing each other with being apart from each other, and
   wherein the cylindrical magnet is located in a space defined by the pair of extending portions of the coil core.

7. The power generator as claimed in any one of claims 1 to 6, wherein the elastic member is a torsion spring, and
   wherein one end of the torsion spring is coupled with the first rotating member and the other end of the torsion spring is coupled with the second rotating member.

8. The power generator as claimed in any one of claims 1 to 7, further comprising an operating portion elastic member for storing the external force as elastic energy when the operating portion is operated by the external force and releasing the stored elastic energy when applying of the external force with respect to the operating portion is released to return the operating portion to an initial position,
wherein the power generator utilizes the elastic energy released from the operating portion elastic member to perform second power generation.

9. The power generator as claimed in claim 8, wherein the first rotating member is rotated when the operating portion is returned to the initial position by the operating portion elastic member, and thereby the elastic energy is again stored in the elastic member, and
wherein the elastic member again releases the stored elastic energy when the rotary torque applied from the elastic member to the second rotating member becomes larger than the magnetic torque generated between the magnet assembly and the coil core of the coil assembly to again rotate the second rotating member and the magnet assembly in an opposite direction, thereby performing the second power generation.

10. An electronic device, comprising:

the power generator defined in any one of claims 1 to 9; and
an electronic circuit driven by the power generator.

# FIG. 1

# FIG. 2

# FIG. 3

51

513

511

514

512

52

Z

X

Y

# FIG. 4

# FIG. 5

# FIG. 6

# FIG. 7

FIG. 8

FIG. 9

FIG. 10

FIG. 11

# FIG. 12

Magnetic torque

Counterclockwise direction

Rotational angle $\theta$ of magnet

Clockwise direction

# FIG. 13

Standby state

FIG. 14A

Depressing is started

FIG. 14B

Rotation of magnet is substantially stopped

FIG. 14C

Elastic energy increases

FIG. 14D

Rotation of magnet is started

## FIG. 14E

First power generation finishes

## FIG. 14F

Rotational angle $\theta$ of magnet

(d)

(c)

(e)

Displacement amount X of operating portion

# FIG. 15

State that operating portion is completely depressed

FIG. 16A

Applying of external force to operating portion is released

FIG. 16B

Rotation of magnet is substantially stopped

FIG. 16C

Elastic energy increases

FIG. 16D

Rotatioin of magnet is started

FIG. 16E

Second power generation finishes

FIG. 16F

Movement amount X of operating portion

Elastic member
Spring constant $k$
Initial angle $\theta_0$

Angle $\theta_3$

FIG. 17A

Teeth number $N1$
Angle $\theta 1$
Magnetic torque $T_m(\theta 1)$

Teeth number $N2$
Angle $\theta 2$

# FIG. 17B

Europäisches
Patentamt

European
Patent Office

Office européen
des brevets

# EUROPEAN SEARCH REPORT

Application Number

EP 18 15 9581

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2010/117462 A1 (WANG JUNE-CHI [TW] ET AL) 13 May 2010 (2010-05-13)<br>* paragraph [0027] - paragraph [0035]; figures 1,3-8 * | 1-5,8<br><br>6 | INV.<br>H02K7/18<br>H02K7/06<br>H02K7/116 |
| Y<br><br>A | DE 697 27 397 T2 (PATEK PHILIPPE SA [CH]) 11 November 2004 (2004-11-11)<br>* paragraphs [0016], [0022] - paragraph [0028]; figures 1,3,4,7,8 * | 6<br><br>1 | |
| X | WO 2010/088306 A1 (KINETIC ENERGY CORP [US]; KENNEDY EUGENE J [US]) 5 August 2010 (2010-08-05)<br>* paragraph [0028] - paragraph [0036]; figures 2-3 * | 1,3,4,<br>7-9 | |
| X | US 2009/066177 A1 (LOKE DONALD R [US]) 12 March 2009 (2009-03-12)<br>* the whole document * | 1,10 | |
| A | DE 196 54 069 A1 (HEIDELBERGER DRUCKMASCH AG [DE]) 31 July 1997 (1997-07-31)<br>* the whole document * | 7 | TECHNICAL FIELDS SEARCHED (IPC)<br><br>H02K<br>F16H |

The present search report has been drawn up for all claims

| Place of search | Date of completion of the search | Examiner |
|---|---|---|
| Munich | 12 September 2018 | von Rauch, Marianne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 15 9581

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2018

| Patent document cited in search report | | Publication date | Patent family member(s) | | Publication date |
|---|---|---|---|---|---|
| US 2010117462 | A1 | 13-05-2010 | NONE | | |
| DE 69727397 | T2 | 11-11-2004 | AU | 5131498 A | 15-07-1998 |
| | | | CH | 689469 A5 | 30-04-1999 |
| | | | DE | 69727397 D1 | 04-03-2004 |
| | | | DE | 69727397 T2 | 11-11-2004 |
| | | | EP | 0944862 A1 | 29-09-1999 |
| | | | JP | 3969747 B2 | 05-09-2007 |
| | | | JP | 2001507557 A | 05-06-2001 |
| | | | US | 6041022 A | 21-03-2000 |
| | | | WO | 9827473 A1 | 25-06-1998 |
| WO 2010088306 | A1 | 05-08-2010 | CA | 2788179 A1 | 05-08-2010 |
| | | | CA | 2788180 A1 | 05-08-2010 |
| | | | CA | 2788182 A1 | 05-08-2010 |
| | | | CA | 2788183 A1 | 05-08-2010 |
| | | | CA | 2788242 A1 | 05-08-2010 |
| | | | CA | 2788393 A1 | 05-08-2010 |
| | | | CN | 102369446 A | 07-03-2012 |
| | | | CN | 102369658 A | 07-03-2012 |
| | | | CN | 102369659 A | 07-03-2012 |
| | | | CN | 102369660 A | 07-03-2012 |
| | | | CN | 102369661 A | 07-03-2012 |
| | | | CN | 102369662 A | 07-03-2012 |
| | | | EP | 2411816 A1 | 01-02-2012 |
| | | | EP | 2422442 A1 | 29-02-2012 |
| | | | EP | 2422443 A1 | 29-02-2012 |
| | | | EP | 2425526 A1 | 07-03-2012 |
| | | | EP | 2433354 A2 | 28-03-2012 |
| | | | EP | 2449260 A2 | 09-05-2012 |
| | | | US | 2011084499 A1 | 14-04-2011 |
| | | | US | 2011084500 A1 | 14-04-2011 |
| | | | US | 2011084501 A1 | 14-04-2011 |
| | | | US | 2011089703 A1 | 21-04-2011 |
| | | | US | 2011089762 A1 | 21-04-2011 |
| | | | US | 2011101701 A1 | 05-05-2011 |
| | | | US | 2014084596 A1 | 27-03-2014 |
| | | | US | 2014152020 A1 | 05-06-2014 |
| | | | US | 2014152021 A1 | 05-06-2014 |
| | | | US | 2014152022 A1 | 05-06-2014 |
| | | | US | 2014152023 A1 | 05-06-2014 |
| | | | US | 2016380511 A1 | 29-12-2016 |
| | | | US | 2017110936 A1 | 20-04-2017 |
| | | | WO | 2010088306 A1 | 05-08-2010 |
| | | | WO | 2010088307 A1 | 05-08-2010 |
| | | | WO | 2010088308 A1 | 05-08-2010 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 18 15 9581

This annex lists the patent family members relating to the patent documents cited in  the above-mentioned European search report.
The members are as contained in the European Patent Office EDP file on
The European Patent Office is in no way liable for these particulars which are merely given for the purpose of information.

12-09-2018

| Patent document cited in search report | Publication date | Patent family member(s) | Publication date |
|---|---|---|---|
| | | WO 2010088310 A1<br>WO 2010088312 A2<br>WO 2010088314 A2 | 05-08-2010<br>05-08-2010<br>05-08-2010 |
| US 2009066177 A1 | 12-03-2009 | NONE | |
| DE 19654069 A1 | 31-07-1997 | DE 19654069 A1<br>JP H09203437 A<br>US 5671636 A | 31-07-1997<br>05-08-1997<br>30-09-1997 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001507557 A

- JP H02262866 A